(19) Europäisches Patentamt
European Patent Office
Office européen des brevets

(11) **EP 3 180 216 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(21) Anmeldenummer: **15734171.0**

(22) Anmeldetag: **06.07.2015**

(51) Int Cl.:
**B60T 8/1764** (2006.01)

(86) Internationale Anmeldenummer:
**PCT/EP2015/065316**

(87) Internationale Veröffentlichungsnummer:
**WO 2016/023684 (18.02.2016 Gazette 2016/07)**

(54) **VERFAHREN ZUR ANPASSUNG DER REGELSTRATEGIE EINES SCHLUPFREGELSYSTEMS EINES FAHRZEUGS IN EINER μ-SPLIT-SITUATION**

METHOD FOR ADAPTING THE CONTROL STRATEGY OF A SLIP-CONTROL SYSTEM OF A VEHICLE IN A M-SPLIT SITUATION

PROCÉDÉ D'ADAPTATION DE LA STRATÉGIE DE COMMANDE D'UN SYSTÈME DE COMMANDE DE PATINAGE D'UN VÉHICULE DANS UNE SITUATION μ-SPLIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2014 DE 102014216265**

(43) Veröffentlichungstag der Anmeldung:
**21.06.2017 Patentblatt 2017/25**

(73) Patentinhaber: **Continental Teves AG & Co. OHG 60488 Frankfurt am Main (DE)**

(72) Erfinder:
• **KERBER, Henning**
**64289 Darmstadt (DE)**
• **ROSZYK, Mario**
**61273 Wehrheim (DE)**
• **MÜLLER, Jochen**
**35041 Marburg-Hemershausen (DE)**
• **CORNILS, Arne**
**68649 Rohrheim (DE)**
• **BURKHARD, Dieter**
**55411 Bingen-Büdesheim (DE)**

(56) Entgegenhaltungen:
**US-A- 5 944 394      US-A- 6 000 765
US-A1- 2008 312 793**

**Beschreibung**

Die Erfindung betrifft ein Verfahren zur Anpassung der Regelstrategie eines Schlupfregelsystems eines Bremssystems eines Fahrzeugs in einer $\mu$-Split-Situation gemäß dem Oberbegriff des Patentanspruchs 1 und des Patentanspruchs 2.

Bei bekannten Schlupfregelverfahren wird das Raddrehverhalten gemessen und zur Ermittlung des Radschlupfs und zur Bremsdruckmodulation herangezogen. Bei radindividueller Regelung (Individualregelung, Einzelradregelung) von Fahrzeugrädern wird der Bremsdruck jedes Rades unabhängig von dem Drehverhalten der übrigen Räder geregelt. Mit dieser Vorgehensweise sind zwar geringe Bremswege erreichbar, jedoch kann bspw. das Bremsen auf Fahrbahnen mit unterschiedlichen Reibwerten (mit $\mu$-Split-Situation bezeichnet) zu einem Giermoment um eine Fahrzeughochachse entstehen.

Werden nämlich mittels eines Schlupfregelsystems eines Fahrzeugs dessen einzelnen Fahrzeugräder vollständig nach Schlupfkriterien, also entsprechend der Regelstrategie des Schlupfregelsystems geregelt, stellen sich sehr schnell große Druckdifferenzen zwischen den Fahrzeugrädern der Hochreibwertseite (im Folgenden HM-Räder genannt) und den Fahrzeugrädern der Niedrigreibwertseite (im Folgenden NM-Räder genannt). Diese Druckdifferenzen (bzw. die Längskraftdifferenzen) führen zu dem Giermoment, welches zu einer Drehung des Fahrzeugs in Richtung der Hochreibwertseite führt, welche für den Fahrer im Allgemeinen nicht kontrollierbar ist. Um das Giermoment zu begrenzen, muss der Raddruck an dem HM-Rad in geeigneter Weise begrenzt werden.

So ist aus der DE 42 25 983 A1 ist ein Verfahren bekannt, bei dem zur Verringerung eines durch ein ABS-Regelsystem erzeugten Giermoments der Bremsdruck an den Rädern einer Achse derart beeinflusst, dass die Differenz der Bremsdrücke einer Achse einen maximal zulässigen Wert nicht überschreitet. Dieser maximal zulässige Wert wird von der Fahrzeuggeschwindigkeit und der Querbeschleunigung abhängig gemacht.

Ferner ist es bekannt, die ABS-Regelstrategie in einer $\mu$-Split-Situation nach dem sogenannten "select-low-Prinzip" zu ändern, bei welchem die beiden Hinterräder in Abhängigkeit vom jeweils gerade mit dem niedrigsten Reibwert betriebenen Fahrzeugrad blockiergeregelt werden. Das bedeutet, dass in der $\mu$-Split-Situation die Bremse des auf dem höheren Reibwert $\mu$ laufenden Hinterrads nur mit demselben vergleichsweise niedrigen Bremsdruck beaufschlagt wird, wie die Bremse des auf dem niedrigeren Reibwert laufenden anderen Hinterrades, obgleich es wegen des an diesem HM-Rad vorherrschenden höheren Reibwertes auch ohne zu blockieren stärker abgebremst werden könnte.

Ferner ist aus der DE 39 25 828 A1 ein ABS-Regelsystem mit GMB (Giemomentenbegrenzung) bekannt, das zur Bestimmung der Druckdifferenz den vom Fahrer eingesteuerten Druck an dem rechten und linken Rad misst. Über einen Vergleich des Solldrucks mit dem Istdruck wird die zulässige Druckdifferenz ermittelt und beim Überschreiten einer vorgegebenen Druckdifferenz der Bremsdruck am anderen Rad über einen Steuerimpuls abgebaut. Die vorgegebene Solldruckdifferenz kann in Abhängigkeit vom Reibwert am auf dem niedrigen Reibwert umlaufenden Vorderrad (LM-Rad) variiert werden.

Auch die DE 41 14 734 A1 beschreibt darüber hinaus ein ABS-Regelsystem mit GMB, das ohne Drucksensoren auskommt. Hier wird fortlaufend aus Druckabbausignalen ein die Druckdifferenz an zwei gegenüberliegenden Rädern wiedergebender Wert ermittelt. Bei einer $\mu$-split-Situation wird der mittlere Druckaufbaugradient an dem HM-Rad in Abhängigkeit von der Druckdifferenz bzw. dem die Druckdifferenz wiedergebenden Wert und der Fahrzeugverzögerung variiert. Bei der Bestimmung der Druckdifferenz wird eine Gewichtung vorgenommen, die den Verlauf des bremsensystembedingten Druckabbaugradienten anfangs steiler und anschließend flacher mit asymptotischer Näherung an Null berücksichtigt.

Sowohl bei der DE 39 25 828 A1 als auch der DE 41 14 734 A1 erfolgt die Ermittlung der zulässigen Druckdifferenz in Abhängigkeit von Zuständen des LM- und HM-Rades sowie vom Fahrverhalten bzw. von der Fahrsituation des Fahrzeugs.

Aus der US 5,944,394 geht ebenfalls ein Verfahren zur Begrenzung der Druckdifferenz in einer $\mu$-Split Situation hervor. Bei diesem Verfahren wird die Druckdifferenz zwischen HM-Rad und LM-Rad die ganze Zeit begrenzt. Genauer gesagt orientiert sich die Größe der Druckdifferenz am Absolutdruck des Rades, welches in der ABS-Regelung ist (LM-Rad). Erst wenn der Absolutdruck des LM-Rades steigt, wird auch zugelassen, dass sich der Druck am HM-Rad erhöht.

Die Aufgabe der Erfindung besteht darin, ein eingangs genanntes Verfahren zu schaffen, mit welchem zur Begrenzung eines Giermomentes in einer $\mu$-Split-Situation die sich einstellenden Druckdifferenzen an gegenüberliegenden Fahrzeugrädern einer Achse begrenzt werden, diese Begrenzung jedoch ohne die Kenntnis des Fahrverhaltens oder der Fahrsituation des Fahrzeugs erfolgt.

Diese Aufgabe wird gelöst durch ein Verfahren mit den Merkmalen des Patentanspruchs 1 sowie mit den Merkmalen des Patentanspruchs 2.

Dieses Verfahren zur Anpassung der Regelstrategie eines Schlupfregelsystems eines Bremssystems eines Fahrzeugs in einer $\mu$-Split-Situation, in welcher an gegenüberliegenden Fahrzeugrädern einer Fahrzeugachse unterschiedliche aus der Regelstrategie des Schlupfregelsystems bestimmte radindividuelle Bremsdrücke eingestellt werden und sich dabei die ergebende Bremsdruckdifferenz begrenzt ist, zeichnet sich gemäß der erstgenannten Lösung dadurch aus, dass

- zur Erzeugung einer Bremsdruckanforderung für die gegenüberliegenden Fahrzeugräder radindividuell ein maximaler Druckdifferenzwert bestimmt wird, welcher mit einem vorgegebenen Toleranzwert von einer Bezugsdruckdifferenz abweicht, wobei die Bezugsdruckdifferenz dem Wert der aktuellen tiefpassgefilterten Bremsdruckdifferenz entspricht, und
- die Bremsdruckanforderung für jedes Fahrzeugrad als Minimum des aus der Regelstrategie des Schlupfregelsystems bestimmten radindividuellen Bremsdruckes sowie der Summe aus dem für das gegenüberliegende Fahrzeugrad aus der Regelstrategie des Schlupfregelsystems bestimmten radindividuellen Bremsdruck und dem radindividuellen maximalen Druckdifferenzwert bestimmt wird.

Die zweitgenannte Lösung zeichnet sich dadurch aus, dass

- zur Erzeugung einer Bremsdruckanforderung für die gegenüberliegenden Fahrzeugräder radindividuell ein maximaler Druckdifferenzwert bestimmt wird, welcher mit einem vorgegebenen Toleranzwert von einer Bezugsdruckdifferenz abweicht, wobei die Bezugsdruckdifferenz dem Wert der aktuellen tiefpassgefilterten Bremsdruckdifferenz entspricht, und
- die Bremsdruckanforderung für jedes Fahrzeugrad als Minimum des aus der Regelstrategie des Schlupfregelsystems bestimmten radindividuellen Bremsdruckes sowie der Summe aus dem mittleren Bremsdruck des gegenüberliegenden Fahrzeugrades und dem radindividuellen maximalen Druckdifferenzwert bestimmt wird.

Bei diesem erfindungsgemäßen Verfahren werden die von dem Schlupfregelsystem erzeugten Bremsdruckanforderungen für jedes Fahrzeugrad derart begrenzt, dass sich die aus diesen Bremsdruckanforderungen ergebende Druckdifferenz innerhalb einer vorgegebenen Toleranz um eine Bezugsdruckdifferenz abweicht, die der aktuellen tiefpassgefilterten Bremsdruckdifferenz entspricht.

Die Stell- und Regelvorgänge des Schlupfregelsystems erfolgt in einem Zeitraster, "Loop" genannt. Die radindividuellen Druckanforderungen seitens des Schlupfregelsystems an einen Druckregler des Bremssystems des Fahrzeugs erfolgen daher loopweise. Das heißt, dass die Bremsdruckanforderung $P_{req,i+1,n}$ an Rad n (n=0, 1: bspw. für die beiden Räder der Vorderachse) für die nächste, also die (i+1)-te Loop lediglich um eine vorgegebene Toleranz von der aktuellen tiefpassgefilterten Bremsdruckdifferenz $p_{filt,diff,i}$ der aktuellen, also der i-ten Loop abweicht.

Zur Erzeugung der radindividuellen Bremsdruckanforderung $P_{req,i+1,n}$ für die (i+1)-te Loop werden zunächst für jedes Rad n radindividuell ein maximaler Druckdifferenzwert $p_{diff,i+1,n}$ bestimmt, welcher mit einem vorgegebenen Toleranzwert $p_{tol}$ von einer Bezugsdruckdifferenz $P_{o,i}$ abweicht, wobei die Bezugsdruckdifferenz $P_{o,i}$ dem Wert der aktuellen tiefpassgefilterten Bremsdruckdifferenz $p_{filt,diff,i}$ der aktuellen, also der i-ten Loop entspricht. Diese tiefpassgefilterte Bremsdruckdifferenz $p_{filt,diff,i}$ wird aufgrund der Erkenntnis verwendet, dass das Gierverhalten des Fahrzeugs nicht nur aus der aktuellen Druckdifferenz, sondern insbesondere durch die mittlere Druckdifferenz der nahen Vergangenheit bestimmt wird. Daher wird die Tiefpassfilterung verwendet, da diese eine Mittelung der Druckdifferenzwerte der nahen Vergangenheit bewirkt.

Dieser radindividuelle maximale Druckdifferenzwert $p_{diff,i+1,n}$ entspricht der maximal erlaubten Druckdifferenz zum gegenüberliegenden Rad, die durch den vorgegebene Toleranzwert $p_{tol}$ bestimmt wird.

Gemäß der erstgenannten Lösung werden aus diesen radindividuellen maximal zulässigen Druckdifferenzwerten $p_{diff,i+1,n}$ sowie aus den gemäß der Regelstrategie des Schlupfregelsystems bestimmten radindividuellen Bremsdrücken die Bremsdruckanforderungen $P_{req,i+1,n}$ für die beiden Fahrzeugräder n einer Achse (n=0, 1) für die nächste Loop i+1 bestimmt. Die nach der Regelstrategie des Schlupfregelsystems ermittelten Bremsdrücke sind also ausschließlich nach Raddynamik-Kriterien bestimmt und sind somit unabhängig von den Zuständen der anderen Räder.

Die zweitgenannte Lösung unterscheidet sich von der erstgenannten Lösung dadurch, dass zur Bestimmung der Bremsdruckanforderungen $P_{req,i+1,n}$ für die beiden Fahrzeugräder n einer Achse (n=0, 1) für die nächste Loop i+1 nicht der gemäß der Regelstrategie des Schlupfregelsystems bestimmte radindividuelle Bremsdruck für das gegenüberliegende Rad, sondern dessen mittlerer Bremsdruck verwendet wird. Dieser mittlere Bremsdruck des gegenüberliegenden Rades kann auch in Abhängigkeit von dessen mittleren Beschleunigung modifiziert werden, um die mittlere Längskraft des gegenüberliegenden Fahrzeugrades mit einzubeziehen.

Diese erfindungsgemäßen Verfahren führen zu einer wirksamen Begrenzung des Giermomentes am Fahrzeug ohne jedoch eine Situationserkennung des Fahrzeugs hinsichtlich dessen Zustandes durchführen zu müssen.

Es hat sich als vorteilhaft herausgestellt, dass weiterbildungsgemäß zur Bestimmung des maximalen Druckdifferenzwertes für die gegenüberliegenden Fahrzeugräder identische Toleranzwerte verwendet werden. Damit bildet sich über mehrere Loops ein symmetrisches Toleranzband um die tiefpassgefilterte Bremsdruckdifferenz aus.

Stehen dem Schlupfregelsystem Informationen zu Fahrzeugstabilität zur Verfügung, können nach einer Ausgestaltung der Erfindung zur Bestimmung des maximalen Druckdifferenzwertes für die gegenüberliegenden Fahrzeugräder unterschiedliche Toleranzwerte verwendet werden, wodurch ein asymmetrisches Toleranzband über mehrere Loops entsteht.

Schließlich ist es besonders vorteilhaft, wenn gemäß einer Weiterbildung der Erfindung die Bremsdruckdifferenz in Abhängigkeit der Differenz der Beschleunigungen der beiden einander gegenüberliegende Fahrzeugräder modifiziert und anschließend tiefpassgefiltert wird. Damit ist nicht nur die mittlere Bremsdruckdifferenz bei der Bestimmung der Bremsdruckanforderung relevant, sondern zusätzlich auch die Längskraftdifferenz der an den beiden Fahrzeugrädern wirksamen Längskraft, da letztendlich die an einem Fahrzeugrad wirksame Längskraftdifferenz für das Entstehen des Giermomentes entscheidend ist.

Im Folgenden wird das erfindungsgemäße Verfahren unter Bezugnahme auf die beigefügten Figuren näher erläutert und beschrieben werden. Es zeigen:

Figur 1    ein t-p-Diagramm zur Erläuterung des erfindungsgemäßen Verfahrens,

Figur 2    ein weiteres t-p-Diagramm zur Erläuterung des erfindungsgemäßen Verfahrens, und

Figur 3    ein weiteres t-p-Diagramm zur Erläuterung des erfindungsgemäßen Verfahrens.

Im Folgenden wird von einem Fahrzeug mit einem ein Schlupfregelsystem, bspw. ein ABS-Regelsystem aufweisenden Bremssystem ausgegangen, wobei die Fahrzeugräder von dem ABS-Regelsystem schlupfregelbar sind. An einem solchen Fahrzeugrad kann Schlupf auftreten, der über eine Differenz zwischen der Radumfangsgeschwindigkeit und der Fahrzeuggeschwindigkeit bestimmt wird.

Falls das ABS-Regelsystem einen Schlupf bzw. ein drohendes Blockieren eines Fahrzeugrades erkennt, werden entsprechende Druckanforderungen für einen Bremsdruckregler erzeugt, wodurch dieser veranlasst wird, den zu hohen Bremsdruck an diesem Fahrzeugrad abzusenken. Hierdurch wird das Rad vom Bremsdruck entlastet und erhält Gelegenheit, wieder anzulaufen. Sobald sich die Radgeschwindigkeit wieder der Fahrzeuggeschwindigkeit angeglichen hat, kann das Rad wieder mit Bremsdruck beaufschlagt werden. Hierdurch ergeben sich Druck-Regelzyklen mit Druckmodulationen an dem Fahrzeugrad um einen mittleren Bremsdruck.

Im Falle einer Bremsung auf einer Fahrbahn mit unterschiedlichen Reibwerten (μ-Split-Situation), in der das linke Vorderrad (als Rad 0 bezeichnet) der Vorderachse des Fahrzeugs als LM-Rad auf einer Niedrigreibwertseite und das rechte Vorderrad (als Rad 1 bezeichnet) der Vorderachse auf einer Hochreibwertseite abrollt, steigert sich der Bremsdruck ausgehend vom Zeitpunkt der Bremsung zunächst für beide Räder, also für HM-Rad und das LM-Rad gleichartig. Erkennt das ABS-Regelsystem eine Blockierneigung des LM-Rades, veranlasst es hierauf eine Bremsdruckabsenkung mit einem Abregeldruck an diesem LM-Rad. Hieran schließt sich eine Druckhaltephase mit einer erneuten Drucksteigerung an, mit der gleichzeitig ein neuer Regelzyklus beginnt.

Während dieser Regelzyklen an dem LM-Rad steigt jedoch der Bremsdruck an dem HM-Rad weiter an, bis gemäß des erfindungsgemäßen Verfahrens die sich einstellende Bremsdruckdifferenz an diesen gegenüberliegenden Fahrzeugrädern begrenzt wird, um ein auftretendes Giermoment so weit abzuschwächen, dass das Fahrzeug durch den Fahrer beherrschbar bleibt.

Die zulässigen Änderungen der Bremsdruckdifferenzen an den beiden Vorderrädern (HM-Rad 0 und LM-Rad 1) werden nicht auf die aktuell vorliegenden Bremsdruckdifferenzen $p_{diff}$ bezogen, sondern auf die tiefpassgefilterten Bremsdruckdifferenzen $p_{filt,diff}$. Die radindividuellen Druckanforderungen $p_{req,wdc}$ des ABS-Regelsystems werden derart begrenzt, dass die sich einstellende Bremsdruckdifferenz $p_{diff}$ maximal nur um einen vorgegebenen Toleranzwert von der tiefpassgefilterten Bremsdruckdifferenz $p_{filt,diff}$ als Bezugsdruckdifferenz $p_{o,i}$ abweicht. Mit diesem vorgegebenen Toleranzwert entsteht ein Toleranzband um diese Bezugsdruckdifferenz $p_{o,i}$, wobei dieses Toleranzband symmetrisch oder asymmetrisch ausgelegt werden kann.

Die Stell- und Regelvorgänge des ABS-Regelsystems erfolgt in einem Zeitraster, "Loop" genannt. Die radindividuellen Druckanforderungen seitens des ABS-Regelsystems an den Druckregler des Bremssystems des Fahrzeugs erfolgen daher loopweise. Das heißt, dass die Bremsdruckanforderung $P_{req,i+1,n}$ an Rad n (n=0, 1) der Vorderachse für die nächste, also die (i+1)-te Loop lediglich um eine vorgegebene Toleranz von der aktuellen tiefpassgefilterten Bremsdruckdifferenz $p_{filt,diff,i}$ der aktuellen, also der i-ten Loop abweicht.

Zur Erzeugung der radindividuellen Bremsdruckanforderung $P_{req,i+1,n}$ für die (i+1)-te Loop werden zunächst für jedes Rad n radindividuell ein maximaler Druckdifferenzwert $p_{diff,i+1,n}$ bestimmt, welcher mit einem vorgegebenen Toleranzwert $p_{tol}$ von der Bezugsdruckdifferenz $P_{o,i}$ abweicht, wobei die Bezugsdruckdifferenz $P_{o,i}$ dem Wert der aktuellen tiefpassgefilterten Bremsdruckdifferenz $p_{filt,diff,i}$ der aktuellen, also der i-ten Loop entspricht. Diese tiefpassgefilterte Bremsdruckdifferenz $p_{filt,diff,i}$ wird aufgrund der Erkenntnis verwendet, dass sich das Gierverhalten des Fahrzeugs nicht nur aus der aktuellen Bremsdruckdifferenz, sondern insbesondere durch die mittlere Bremsdruckdifferenz der nahen Vergangenheit bestimmt wird. Daher wird die Tiefpassfilterung verwendet, da diese eine Mittelung der Bremsdruckdifferenzwerte der nahen Vergangenheit bewirkt.

Dieser radindividuelle maximale Druckdifferenzwert $p_{diff,i+1,n}$ entspricht der maximal erlaubten Druckdifferenz zum gegenüberliegenden Rad, die durch den vorgegebene Toleranzwert $p_{tol}$ bestimmt wird.

Bei der Berechnung dieses maximalen Druckdifferenzwertes $p_{diff,i+1,n}$ für das Rad n muss, je nachdem ob dieses Rad n ein rechtes oder ein linkes Rad der Vorderachse ist, das Vorzeichen der gefilterten Bremsdruckdifferenz berücksichtigt werden. So ergibt für das linke Vorderrad Rad 0 bzw. das rechte Vorderrad Rad 1:

$$p_{diff,i+1,0} = -p_{filt,diff,i} + p_{tol}, \text{ und} \qquad (1)$$

$$p_{diff,i+1,1} = +p_{filt,diff,i} + p_{tol}, \qquad (2)$$

wobei $p_{filt,diff,i}$ die aktuelle tiefpassgefilterte Bremsdruckdifferenz, $p_{tol}$ der vorgegebene Toleranzwert und $p_{diff,i+1,0}$ bzw. $p_{diff,i+1,1}$ die Bremsdruckanforderung für das Rad 0 bzw. Rad 1 für die nächste Loop (i+1) ist.

Der Toleranzwert $p_{tol}$ sollte so gewählt werden, dass dieser Wert der Größe der normalen Druckabbauten des Rades 0 bzw. 1 unter homogenen Bedingungen entspricht und keine Auswirkungen auf das gegenüberliegende Rad hat.

Die Druckanforderungen $P_{req,i+1,0}$ und $P_{req,i+1,1}$ für das Rad 0 und das Rad 1 werden nach folgender Formel berechnet:

$$P_{req,i+1,0} = \min(P_{req,wdc,i+1,0} , P_{req,wdc,i+1,1}+p_{diff,i+1,0}), \text{ und} \quad (3)$$

$$P_{req,i+1,1} = \min(P_{req,wdc,i+1,1} , P_{req,wdc,i+1,0}+p_{diff,i+1,1}), \qquad (4)$$

wobei $P_{req,wdc,i+1,n}$ (n=0, 1) der aus der Regelstrategie der ABS-Regelung, also nur aus Raddynamik-Kriterien bestimmte radindividuelle Bremsdruck für das Rad 0 und das Rad 1 und $p_{diff,i+1,0}$ (n=0, 1) der zulässige maximale Druckdifferenzwert für das Rad o bzw. das Rad 1 ist.

Anhand folgender Beispiele soll das erfindungsgemäße Verfahren erläutert werden.

Beispiel 1: Es liegt eine $\mu$-Split-Situation vor, in der das linke Vorderrad als LM-Rad 0 auf der Niedrigreibwertseite und das rechte Vorderrad als HM-Rad 1 auf der Hochreibwertseite abrollt und das ABS-Regelsystem eine Blockierneigung des LM-Rades 0 detektiert. Hierauf wird mit einem Abregeldruck mit $P_{req,wdc,i+1,0}$ = 10 bar entsprechend der Regelstrategie angeregelt, wobei das HM-Rad 1 sich noch nicht in einer ABS-Regelung befindet und daher der Wert für $P_{req,wdc,i+1,1}$ auf "infinite", also auf unendlich gesetzt wird. Die gefilterte Bremsdruckdifferenz $p_{filt,diff,i}$ zeigt den Wert 0.

Das ABS-Regelsystem bestimmt zunächst den maximalen Druckdifferenzwert $p_{diff,i+1,n}$ (n=0, 1) für das LM-Rad 0 und das HM-Rad 1, wobei der Toleranzwert $p_{tol}$ auf den Wert 20 bar gesetzt ist, der symmetrisch um den Wert der gefilterten Bremsdruckdifferenz $p_{filt,diff,i}$ liegt. Gemäß den Formeln (1) und (2) ergibt sich damit:

$$p_{diff,i+1,0} = (-p_{filt,diff,i} + p_{tol}) = (0 + 20 \text{ bar}) = 20 \text{ bar}$$

$$p_{diff,i+1,1} = (+p_{filt,diff,i} + p_{tol}) = (0 + 20 \text{ bar}) = 20 \text{ bar}.$$

Damit kann an das Rad 0 gegenüber dem Rad 1 20 bar mehr Bremsdruck angelegt werden, ebenso kann der Bremsdruck am Rad 1 gegenüber dem Rad 0 20 bar mehr betragen.

Für die Bremsdruckanforderung $P_{req,i+1,0}$ und $P_{req,i+1,1}$ für die das Rad 0 und das Rad 1 ergibt sich hieraus gemäß den Formeln (3) und (4) :

$$P_{req,i+1,0} = \min(P_{req,wdc,i+1,0} , P_{req,wdc,i+1,1}+p_{diff,i+1,0})$$

$$= (10 \text{ bar}, \text{ infinite} + 20 \text{ bar}) = 10 \text{ bar},$$

und

$$P_{req,i+1,1} = \min(P_{req,wdc,i+1,1} , P_{req,wdc,i+1,0}+p_{diff,i+1,1})$$

$$= (\text{infinite}, 10 \text{ bar} + 20 \text{ bar}) = 30 \text{ bar}.$$

Der Druckabbau am LM-Rad 0 mit 10 bar setzt sich weiter fort, während der Bremsdruck am HM-Rad 1 auf 30 bar begrenzt wird. Das Fahrzeug bleibt stabil, da das Auseinanderdriften, also die sich an den beiden Rädern der Vorderachse ausbildende Druckschere (Differenzdruck) begrenzt bleibt.

Beispiel 2: Setzt sich ausgehend von Beispiel 1 die μ-Split-Regelung fort, erfolgt ein weiterer Druckanstieg am HM-Rad 1, wobei die Druckanforderung $P_{req,i+1,0}$ und $P_{req,i+1,1}$ gemäß Beispiel 1 zu einer momentanen Bremsdruckdifferenz von 20 bar führen. Steht diese Bremsdruckdifferenz über einen längeren Zeitraum an, in welchem der Fahrer des Fahrzeugs ausreichend Zeit hätte, sein Fahrverhalten anzupassen, also bspw. gegen das auftretende Giermoment gegenzulenken, nimmt auch die gefilterte Bremsdruckdifferenz $p_{filt,diff,i}$ den Wert 20 bar an. Mit diesem Wert werden für die nächste Loop (i+1) die neuen maximalen Druckdifferenzwerte $p_{diff,i+1,n}$ (n=0, 1) für das LM-Rad 0 und das HM-Rad 1 bestimmt, wobei der Toleranzwert $p_{tol}$ wieder auf den Wert 20 bar gesetzt ist. Gemäß den Formeln (1) und (2) ergibt sich damit:

$$p_{diff,i+1,0} = (-p_{filt,diff,i} + p_{tol}) = (-20 \text{ bar} + 20 \text{ bar}) = 0 \text{ bar}$$

$$p_{diff,i+1,1} = (+p_{filt,diff,i} + p_{tol}) = (+20 \text{ bar} + 20 \text{ bar}) = 40 \text{ bar}$$

Diese neuen Werte $p_{diff,i+1,0}$ und $p_{diff,1+1,1}$ liegen wieder symmetrisch um die gefilterte Druckdifferenz $p_{filt,diff,i}$ von 20 bar.

Für die Bremsdruckanforderung $P_{req,i+1,0}$ und $P_{req,i+1,1}$ für das Rad 0 und das Rad 1 ergibt sich hieraus gemäß den Formeln (3) und (4):

$$P_{req,i+1,0} = \min(P_{req,wdc,i+1,0} , P_{req,wdc,i+1,1}+p_{diff,i+1,0})$$

$$= (10 \text{ bar}, \text{infinite} + 0 \text{ bar}) = 10 \text{ bar},$$

und

$$P_{req,i+1,1} = \min(P_{req,wdc,i+1,1} , P_{req,wdc,i+1,0}+p_{diff,i+1,1})$$

$$= (\text{infinite}, 10 \text{ bar} + 40 \text{ bar}) = 50 \text{ bar}.$$

Dies zeigt, dass der Bremsdruck am HM-Rad 1 nach einer gewissen Zeit erhöht wird, in welcher der Fahrer sich an die Situation anpassen, also bspw. Gegenlenken kann. Die Druckschere wird weiter aufgebaut, wobei die Steigerung des Bremsdruckes an dem HM-Rad 1 der Bremsleistung zugutekommt.

Der Gradient, mit dem sich die Druckschere aufbaut, wird durch die Filterkonstante der Tiefpassfilterung der Bremsdruckdifferenz $p_{diff}$ der Bremsdrücke $p_{R0}$ und $p_{R1}$ an dem LM-Rad 0 und dem HM-Rad 1 der Vorderachse sowie den erlaubten Toleranzwert $p_{tol}$ bestimmt.

Beispiel 3: In den Beispielen 1 und 2 wurde die zulässige Toleranz $p_{pol}$ symmetrisch um die gefilterte Bremsdruckdifferenz $p_{filt,diff,i}$ zwischen den Bremsdrücken $p_{R0}$ und $P_{R1}$ der Vorderräder Rad 0 und Rad 1 gelegt, so dass ein symmetrisches Toleranzband entsteht. Hierbei sind keine Informationen hinsichtlich des Stabilitätszustandes des Fahrzeugs erforderlich.

Sind jedoch Fahrstabilitätsinformation vorhanden, kann ein asymmetrisches Toleranzband eingestellt werden, so dass für das LM-Rad 0 und das HM-Rad 1 unterschiedliche Toleranzwerte vorgegeben werden. Die asymmetrische Verschiebung des Toleranzbandes aus dessen symmetrischer Lage erfolgt dabei in Abhängigkeit des Stabilitätsgrades des Fahrzeugs.

Es sei angenommen, dass die gefilterte Bremsdruckdifferenz $p_{filt,diff,i}$ 40 bar betrage, hieraus ergibt sich mit einem symmetrisch auf die gefilterte Bremsdruckdifferenz bezogenen Toleranzwert von 20 bar für die maximalen Druckdifferenzwerte $p_{diff,i+1,n}$ (n=0, 1) für das LM-Rad 0 und das HM-Rad 1:

$$p_{diff,i+1,0} = (-p_{filt,diff,i} + p_{tol}) = (-40 \text{ bar} + 20 \text{ bar}) = -20 \text{ bar}$$

$$p_{diff,i+1,1} = (+p_{filt,diff,i} + p_{tol}) = (+40 \text{ bar} + 20 \text{ bar}) = 60 \text{ bar}$$

Zeigt jedoch eine Fahrstabilitätsinformation eine Tendenz zur Instabilität des Fahrzeugs an, wird die erlaubte Änderung, also der Toleranzwert $p_{tol}$ bezogen auf die gefilterte Druckschere nicht symmetrisch, sondern asymmetrisch ausgelegt:

$$p_{diff,i+1,0} = -20 \text{ bar} + 10 \text{ bar} = -10 \text{ bar}$$

$$p_{diff,i+1,1} = 60 \text{ bar} - 10 \text{ bar} = 50 \text{ bar}.$$

Dies Werte entsprechen einem Toleranzwert $p_{tol,0}$ für das LM-Rad 0 von 30 bar und einem Toleranzwert $p_{tol,1}$ für das HM-Rad 1 von 10 bar. Hieraus ergibt sich für die Bremsdruckanforderung $P_{req,i+1,0}$ und $P_{req,i+1,i}$ für das Rad 0 und das Rad 1:

$$P_{req,i+1,0} = \min(P_{req,wdc,i+1,0} , P_{req,wdc,i+1,1} + p_{diff,i+1,0})$$

$$= (10 \text{ bar, infinite} - 10 \text{ bar}) = 10 \text{ bar},$$

und

$$P_{req,i+1,1} = \min(P_{req,wdc,i+1,1} , P_{req,wdc,i+1,0} + p_{diff,i+1,1})$$

$$= (\text{infinite, } 10 \text{ bar} + 50 \text{ bar}) = 60 \text{ bar}.$$

Die Verschiebung des Toleranzbandes erfolgt derart, dass die weitere Änderung der Bremsdruckdifferenz in die destabilisierende Richtung langsamer erfolgt als in die stabilisierende Richtung und kann in Abhängigkeit vom Grad der Instabilität des Fahrzeugs variiert werden. Dies kann im Extremfall dazu führen, dass nicht nur das Anwachsen der Druckschere in Richtung des HM-Rades 1 verlangsamt wird, sondern dass die Druckschere auch reduziert wird.
Die Fahrstabilitätsinformation kann bspw. als Abweichung einer Fahrzeug-Ist-Gierrate bzw. Fahrzeug-Ist-Gierbeschleunigung usw. zu einer aus einem Modell bestimmten Soll-Gierrate oder Soll-Gierbeschleunidung bestimmt werden.
Beispiel 4: Bei einem Übergang von einem homogenen Hochreibwert für Rad o und Rad 1 in eine μ-Split-Situation, in welcher das Rad 0 auf einen μ-Split-Untergrund rollt und damit das LM-Rad darstellt, wird der Bremsdruck an diesem LM-Rad 0 von 100 bar auf 10 bar abgebaut, während das HM-Rad 1 entsprechend der Regelstrategie des ABS-Regelsystems weiter auf 100 bar geregelt werden sollte.
Mit einem symmetrisch auf die gefilterte Bremdruckdifferenz mit 0 bar bezogenen Toleranzwert von 30 bar ergibt sich für die maximalen Druckdifferenzwerte $p_{diff,i+1,n}$ (n=0, 1) für das LM-Rad 0 und das HM-Rad 1:

$$p_{diff,i+1,0} = (-p_{filt,diff,i} + p_{tol}) = (0 \text{ bar} + 30 \text{ bar}) = 30 \text{ bar}$$

$$p_{diff,i+1,1} = (+p_{filt,diff,i} + p_{tol}) = (0 \text{ bar} + 30 \text{ bar}) = 30 \text{ bar}$$

Hieraus folgt für die Bremsdruckanforderung $P_{req,i+1,0}$ und $P_{req,i+1,1}$ für das Rad 0 und das Rad 1:

$$P_{req,i+1,0} = \min(P_{req,wdc,i+1,0}\ ,\ P_{req,wdc,i+1,1}+p_{diff,i+1,0})$$

$$= (10\ bar,\ 100\ bar\ +\ 30\ bar) = 10\ bar,$$

und

$$P_{req,i+1,1} = \min(P_{req,wdc,i+1,1}\ ,\ P_{req,wdc,i+1,0}+p_{diff,i+1,1})$$

$$= (100\ bar,\ 10\ bar\ +\ 30\ bar) = 40\ bar.$$

Da an dem LM-Rad 0 ein großer Druckabbau von 100 bar auf 10 bar vorgenommen wird, wird am gegenüberliegenden Rad, also am HM-Rad 1 der durch die Regelstrategie vorgesehene Bremsdruck von 100 bar auf 40 bar begrenzt und damit das Giermoment am Fahrzeug limitiert.

Beispiel 5: Befindet sich das Fahrzeug mit den Vorderrädern Rad 0 und Rad 1 auf homogenen Fahrbahnoberflächen, führt das erfindungsgemäße Verfahren zu keiner unnötigen Beschränkung der Bremsdrücke an den beiden Rädern 0 und 1. Beispielhaft sei angenommen, dass das Blockierdruckniveau bei beiden Rädern entsprechend der Regelstrategie des ABS-Reglers 100 bar beträgt. Ferner wird die Situation angenommen, dass die ABS-Reglung eine Bremsdruckreduzierung am Rad 0 auf 80 bar anfordert, während am Rad 1 der Druck von 100 bar beibehalten werden soll. Der Wert für den Toleranzwert beträgt 30 bar symmetrisch bezüglich der gefilterten Bremsdruckdifferenz $p_{diff,filt,i}$ mit dem Wert 0. Es liegt also keine Fahrzeuginstabilität vor.

Damit gilt für die maximalen Druckdifferenzwerte $p_{diff,i+1,n}$ (n=0, 1) für das LM-Rad 0 und das HM-Rad 1:

$$p_{diff,i+1,0} = (-p_{filt,diff,i}\ +\ p_{tol}) = (0\ bar\ +\ 30\ bar) = 30\ bar$$

$$p_{diff,i+1,1} = (+p_{filt,diff,i}\ +\ p_{tol}) = (0\ bar\ +\ 30\ bar) = 30\ bar.$$

Hieraus ergibt sich für die Bremsdruckanforderung $P_{req,i+1,0}$ und $P_{req,i+1,1}$ für das Rad 0 und das Rad 1:

$$P_{req,i+1,0} = \min(P_{req,wdc,i+1,0}\ ,\ P_{req,wdc,i+1,1}+p_{diff,i+1,0})$$

$$= (80\ bar,\ 100\ bar\ +\ 30\ bar) = 80\ bar,$$

und

$$P_{req,i+1,1} = \min(P_{req,wdc,i+1,1}\ ,\ P_{req,wdc,i+1,0}+p_{diff,i+1,1})$$

$$= (100\ bar,\ 80\ bar\ +\ 30\ bar) = 100\ bar.$$

Dies zeigt, dass die Begrenzung des Bremsdruckes gegenüber dem jeweils gegenüberliegenden Rad auf 30 bar keine Auswirkung hat, da diese Begrenzung durch die von dem ABS-Regler entsprechend den Raddynamikkriterien angeforderten radindividuellen Bremsdrücke mit 80 bar und 100 bar nicht überschritten wird. Somit unterbleibt eine unnötige Beschränkung der Bremsdrücke an dem Rad 0 und dem Rad 1.

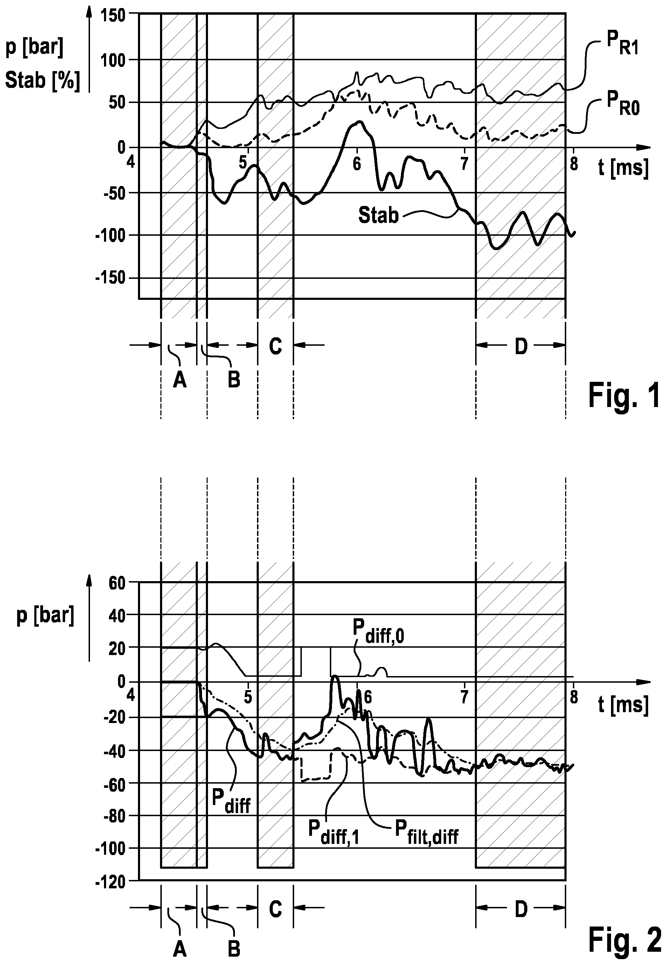

Die beiden Diagramme gemäß den Figuren 1 und 2 zeigen zusammenfassend den Zusammenhang zwischen der tiefpassgefilterten Bremsdruckdifferenz, in Figur 2 als Kurve $p_{filt,diff}$ dargestellt, der Lage des aus den Toleranzwerten $p_{tol}$ sich ergebenen Toleranzbandes, in Figur 2 dargestellt als Kurve $P_{diff,o}$ für das LM-Rad 0 und Kurve $p_{diff,1}$ für das HM-Rad 1 und dem sich hieraus ergebenden Raddruckverlauf, in Figur 1 dargestellt als Kurve $p_{R0}$ für das LM-Rad 0 und als Kurve $p_{R1}$ für das HM-Rad 1. Die Figur 1 zeigt zusätzlich den Verlauf eines Stabilitätsindex Stab, der die Fahrzeugstabilität in %-Werten angibt. So zeigt ein 0%-Wert eine hohe Stabilität des Fahrzeugs und ein -100%-Wert eine niedrige Stabilität des Fahrzeugs an.

Zunächst ist aus Figur 2 zu erkennen, dass die tiefpassgefilterte Bremsdruckdifferenz $p_{filt,diff}$ der ungefilterten Bremsdruckdifferenz $p_{diff}$ zeitverzögert folgt.

Die Zeitintervalle A, B, C und D in den Figuren 1 und 2 entsprechen einander. Diese Zeitintervalle werden im Folgenden erläutert:

Zeitraum A: Über diesen Zeitraum A zeigt der Stabilitätsindex mit Stab=0 eine hohe Fahrzeugstabilität an, die zulässigen maximalen Druckdifferenzwerte $P_{diff,o}$ für das LM-Rad 0 und die maximalen Druckdifferenzwerte $p_{diff,1}$ für das HM-Rad 1 liegen in diesem Zeitraum symmetrisch um die gefilterte Bremsdruckdifferenz $p_{filt,diff}$, die in diesem Zeitintervall den Wert o bar aufweist. Die Druckdifferenzwerte $P_{diff,o}$ und $p_{diff,1}$ bilden daher ein symmetrischen Toleranzband um die tiefpassgefilterte Bremsdruckdifferenz $p_{filt,diff}$.

Zeitintervall B: In diesem Zeitintervall steigen die Bremsdrücke des LM-Rades 0 und des HM-Rades 1 an, wobei aufgrund einer ABS-Regelung der Bremsdruck an dem LM-Rad 0 abgesenkt wird (vgl. Verlauf von $p_{R0}$ und $p_{R1}$ in Figur 1). Gleichzeitig wird entsprechend des erfindungsgemäßen Verfahrens die Druckabsenkung an dem HM-Rad 1 gemäß Kurve $p_{R1}$ begrenzt, so dass die entstehende Druckschere entsprechend dem Verlauf der ungefilterten Bremsdruckdifferenz $p_{diff}$ (vgl. Figur 2) an die untere von $p_{diff,1}$ gebildeten Grenze des Toleranzbandes läuft. Damit wird die ungefilterte Druckdifferenz $p_{diff}$ in den Grenzen innerhalb des Toleranzbandes gehalten.

Im Anschluss an das Zeitintervall B wird das Toleranzband so verschoben, dass die Differenz der gefilterten Bremsdruckdifferenz $p_{filt,diff}$ zum zulässigen maximalen Druckdifferenzwert $P_{diff,o}$ für das LM-Rad 0 größer ist als zum zulässigen maximalen Druckdifferenzwert $p_{diff,1}$ für das HM-Rad 1. Die ungefilterte Bremsdruckdifferenz $p_{diff}$ wird in dem Zeitintervall zwischen den beiden Zeitintervallen B und C durch die untere von $p_{diff,1}$ gebildeten Grenze des Toleranzbandes begrenzt. Der Bremsdruck an dem HM-Rad 1 kann sich gemäß des Verlaufs der Kurve $p_{R1}$ nur langsam aufbauen, da die gefilterte Bremsdruckdifferenz $p_{filt,diff}$ zeitverzögert dem Verlauf der ungefilterten Bremsdruckdifferenz $p_{diff}$ folgt. Die Stabilität gemäß dem Verlauf des Stabilitätsindex Stab nimmt zu (vgl. Figur 1).

Zeitintervall C: In diesem Zeitintervall fällt der Stabilitätsindex Stab gemäß Figur 1 auf -50%, d. h. das Fahrzeug wird instabil. Daher wird das Toleranzband asymmetrisch so verschoben, dass eine weitere Änderung der Druckdifferenz in die destabilisierende Richtung, d. h. weiterer Druckaufbau am HM-Rad 1 langsamer erfolgt als in die stabilisierende Richtung. Gemäß Figur 2 führt dies zu einem langsameren Anwachsen der Druckschere in Richtung des HM-Rades 1, wie aus dem Verlauf der untere Grenze $p_{diff,1}$ des Toleranzbandes aus Figur 1 ersichtlich ist.

Zeitintervall D: In diesem Zeitintervall zeigt der Stabilitätsindex Stab mit dem Wert von -100% eine hohe Instabilität an. Es erfolgt keine weitere asymmetrische Verschiebung des Toleranzbandes, die tiefpassgefilterte Bremsdruckdifferenz $p_{filt,diff}$ gleicht sich an den Verlauf der ungefilterten Bremsdruckdifferenz $p_{diff}$ an. Eine weitere Zunahme der Bremsdruckdifferenz $p_{diff}$ unterbleibt.

Die oben genannte Beispiele 1 bis 5 verwenden zur Bestimmung der zulässigen maximalen Druckdifferenzwerte $p_{diff,i+i,n}$ (n=0, 1) für das LM-Rad 0 und das HM-Rad 1 die tiefpassgefilterte Bremsdruckdifferenz $p_{filt,diff,i}$ (i: i-ter Loop) als Bezugsdruckdifferenz $P_{o,i}$ (i: i-ter Loop). Die gefilterte Bremsdruckdifferenz $p_{filt,diff,i}$ (i: i-ter Loop) wird aufgrund der Annahme verwendet, dass das Gierverhalten des Fahrzeugs nicht nur die aktuelle Bremsdruckdifferenz, sondern durch die mittlere Bremsdruckdifferenz der nahen Vergangenheit bestimmt wird. Eine Optimierung des erfindungsgemäßen Verfahrens lässt sich dadurch erreichen, dass die am Rad wirkende Längskraft als relevante Größe bestimmt wird, die im Grunde die entscheidende Größe darstellt. Die Längskraft oder zumindest der Anteil des Bremsdrucks, der als Längskraft umgesetzt wird, lässt sich über einen Korrekturterm proportional zur gemessenen Radbeschleunigung ermitteln, da sich gemäß des Impulserhaltungssatz (Drallsatz) die Radbeschleunigung aus dem Ungleichgewicht zwischen Bremsmoment (d.h. Bremsdruck) und dem Moment aus der Längskraft im Reifenlatsch multipliziert mit dem Radradius ergibt. Folglich ist, zumindest wenn eine asymmetrische Verschiebung des Toleranzbandes in Abhängigkeit des Grades der Fahrzeuginstabilität angestrebt wird, nicht die Bremsdruckdifferenz, sondern die beschleunigungskorrigierte Bremsdruckdifferenz, d.h. die am Rad wirkende Längskraftdifferenz zu filtern.

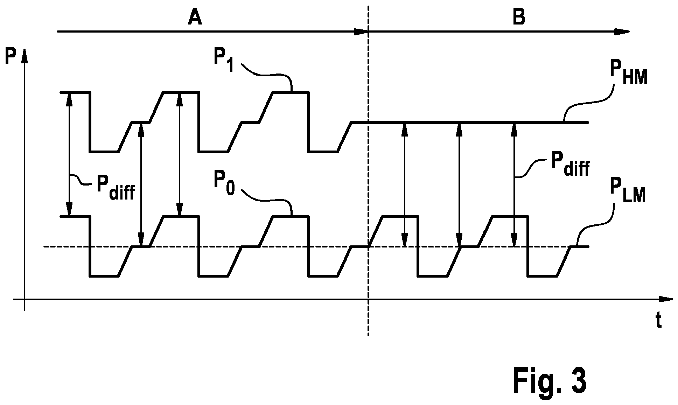

Ferner verwenden die oben erläuterten Beispiele zur Bestimmung der Bremsdruckanforderung $P_{req,i+1,0}$ und $P_{req,i+1,1}$ für das Rad 0 und das Rad 1 gemäß der obigen Formeln (3) und (4) die zulässige maximale Bremsdruckdifferenz $p_{diff,i,0}$ und $P_{diff,i,1}$ (i: i-ter Loop) für das LM-Rad 0 und das HM-Rad 1. Hierbei wird diese maximale Bremsdruckdifferenz $p_{diff,i,0}$ und $p_{diff,i,1}$ auf die Druckanforderung des jeweils gegenüberliegenden Rades entsprechend der ABS-Regelung limitiert. Bei konstanter Bremsdruckdifferenz $p_{diff,i,0}$ oder $p_{diff,i,1}$ würde eine solche Druckanforderung sämtliche Modulationen des jeweils gegenüberliegenden Rades kopieren. Entsprechend der Darstellung nach Figur 3, Bereich A modulieren die Bremsdrücke beide Räder um einen mittleren Bremsdruck, der Bremsdruck $p_1$ des HM-Rades 1 um den mittleren Bremsdruck $p_{HM}$ und der Bremsdruck $p_0$ des LM-Rades 0 um den mittleren Bremsdruck $p_{LM}$. Die ungefilterten Bremsdruckdifferenzen $p_{diff}$ modulieren ebenso um einen Mittelwert.

Um die Druckmodulation zu vermindern können anstelle der Größen $P_{req,i,0}$ und $P_{req,i,1}$ (i: i-te Loop) für das LM-Rad o und das HM-Rad 1 diese mittleren Bremsdrücke $p_{LM}$ und $p_{HM}$ in den Formeln (3) und (4) verwendet werden:

$$P_{req,i+1,0} = min(P_{req,wdc,i+1,0} , p_{HM}+p_{diff,i+1,0}), \text{ und} \qquad (3')$$

$$P_{req,i+1,1} = min(P_{req,wdc,i+1,1} , p_{LM}+p_{diff,i+1,1}). \qquad (4')$$

Diese Situation ist in Figur 3, Bereich B dargestellt. Die ungefilterten Bremsdruckdifferenzen $p_{diff}$ verlaufen nahezu konstant in diesem Bereich B.

Eine weitere Optimierung lässt sich dadurch erreichen, dass mit den mittleren Bremsdrücken $p_{LM}$ und $p_{HM}$ die am Rad wirkende Längskraft mittels eines Korrekturterms erfasst wird, der in Abhängigkeit der gemessenen Radbeschleunigung ermittelt wird. Im Ergebnis wird die am LM-Rad 0 und am HM-Rad 1 wirkende mittlere Längskraft verwendet.

Die oben beschriebenen Beispiele zeigen, dass das erfindungsgemäße Verfahren im Prinzip ohne eine Situationserkennung hinsichtlich der Fahrstabilität des Fahrzeugs auskommt, aber trotzdem ein auftretendes Giermoment am Fahrzeug begrenzt (vgl. Beispiele 1 bis 4)und unnötige Eingriffe vermeidet (vgl. Beispiel 5). Das erfindungsgemäße Verfahren kann sowohl für die Vorderachse als auch für die Hinterachse eines Fahrzeugs eingesetzt werden.

**Patentansprüche**

1.  Verfahren zur Anpassung der Regelstrategie eines Schlupfregelsystems eines Bremssystems eines Fahrzeugs in einer $\mu$-Split-Situation, in welcher an gegenüberliegenden Fahrzeugrädern (LM-Rad 0, HM-Rad 1) einer Fahrzeugachse unterschiedliche aus der Regelstrategie des Schlupfregelsystems bestimmte radindividuelle Bremsdrücke ($P_{req,wdc,i+1,0}$, $P_{req,wdc,i+1,1}$) eingestellt werden und sich dabei die ergebende Bremsdruckdifferenz ($p_{diff}$) begrenzt ist,
    **dadurch gekennzeichnet dass**

    - zur Erzeugung einer Bremsdruckanforderung ($P_{req,i+1,0}$, $P_{req,i+1,1}$) für die gegenüberliegenden Fahrzeugräder (LM-Rad 0, HM-Rad 1) radindividuell ein maximaler Druckdifferenzwert ($P_{diff,i+1,0}$, $p_{diff,i+1,1}$) bestimmt wird, welcher mit einem vorgegebenen Toleranzwert ($p_{tol}$) von einer Bezugsdruckdifferenz ($p_{oi}$) abweicht, wobei die Bezugsdruckdifferenz ($p_{oi}$) dem Wert der aktuellen tiefpassgefilterten Bremsdruckdifferenz ($p_{filt,diff,i}$) entspricht, und
    - die Bremsdruckanforderung ($P_{req,i+1,0}$, $P_{req,i+1,1}$) für jedes Fahrzeugrad (LM-Rad 0, HM-Rad 1) als Minimum des aus der Regelstrategie des Schlupfregelsystems bestimmten radindividuellen Bremsdruckes ($P_{req,wdc,i+1,0}$, $P_{req,wdc,i+1,1}$) sowie der Summe aus dem für das gegenüberliegende Fahrzeugrad aus der Regelstrategie des Schlupfregelsystems bestimmten radindividuellen Bremsdruck ($P_{req,wdc,i+1,1}$, $P_{req,wdc,i+1,0}$) und dem radindividuellen maximalen Druckdifferenzwert ($P_{diff,i+1,0}$, $p_{diff,i+1,1}$) bestimmt wird.

2.  Verfahren zur Anpassung der Regelstrategie eines Schlupfregelsystems eines Bremssystems eines Fahrzeugs in einer $\mu$-Split-Situation, in welcher an gegenüberliegenden Fahrzeugrädern (LM-Rad 0, HM-Rad 1) einer Fahrzeugachse unterschiedliche aus der Regelstrategie des Schlupfregelsystems bestimmte radindividuelle Bremsdrücke ($P_{req,wdc,i+1,0}$, $P_{req,wdc,i+1,1}$) eingestellt werden und sich dabei die ergebende Bremsdruckdifferenz ($p_{diff}$) begrenzt ist,
    **dadurch gekennzeichnet, dass**

    - zur Erzeugung einer Bremsdruckanforderung ($P_{req,i+1,0}$, $P_{req,i+1,1}$) für die gegenüberliegenden Fahrzeugräder (LM-Rad 0, HM-Rad 1) radindividuell ein maximaler Druckdifferenzwert ($P_{diff,i+1,0}$, $p_{diff,i+1,1}$) bestimmt wird, welcher mit einem vorgegebenen Toleranzwert ($p_{tol}$) von einer Bezugsdruckdifferenz ($p_{oi}$) abweicht, wobei die Bezugsdruckdifferenz ($p_{oi}$) dem Wert der aktuellen tiefpassgefilterten Bremsdruckdifferenz ($p_{filt,diff,i}$) entspricht, und
    - die Bremsdruckanforderung ($P_{req,i+1,0}$, $P_{req,i+1,1}$) für jedes Fahrzeugrad (LM-Rad 0, HM-Rad 1) als Minimum des aus der Regelstrategie des Schlupfregelsystems bestimmten radindividuellen Bremsdruckes ($P_{req,wdc,i+1,0}$, $P_{req,wdc,i+1,1}$) sowie der Summe aus dem mittleren Bremsdruck ($p_{LM}$, $p_{HM}$) des gegenüberliegenden Fahrzeugrades (LM-Rad 1, HM-Rad 0) und dem radindividuellen maximalen Druckdifferenzwert ($p_{diff,i+1,0}$, $p_{diff,i+1,1}$) bestimmt wird.

**3.** Verfahren nach Anspruch 2, **dadurch gekennzeichnet dass**, zur Bestimmung der Bremsdruckanforderung ($P_{req,wdc,i+1,0}$, $P_{req,wdc,i+1,1}$) der mittlere Bremsdruck des gegenüberliegenden Fahrzeugrades (LM-Rad 0, HM-Rad 1) in Abhängigkeit von dessen mittleren Beschleunigung modifiziert wird.

**4.** Verfahren nach einem der vorhergehenden Ansprüche, **dadurch gekennzeichnet dass**, zur Bestimmung des maximalen Druckdifferenzwertes ($P_{diff,i+1,0}$, $p_{diff,i+1,1}$) für die gegenüberliegenden Fahrzeugräder (LM-Rad 0, HM-Rad 1) identische Toleranzwerte $p_{tol}$) verwendet werden.

**5.** Verfahren nach einem der Ansprüche 1 bis 3, **dadurch gekennzeichnet, dass** zur Bestimmung des maximalen Druckdifferenzwertes ($p_{diff,i+1,0}$, $p_{diff,i+1,1}$) für die gegenüberliegenden Fahrzeugräder (LM-Rad 0, HM-Rad 1) unterschiedliche Toleranzwerte ($p_{tol}$) verwendet werden.

**6.** Verfahren nach einem der vorhergehenden Ansprüche, **dadurch gekennzeichnet, dass** die Bremsdruckdifferenz ($p_{diff}$) in Abhängigkeit der Differenz der Beschleunigungen der beiden einander gegenüberliegenden Fahrzeugräder (LM-Rad 0, HM-Rad 1) modifiziert und anschließend tiefpassgefiltert wird.

**Claims**

**1.** Method for adapting the control strategy of a slip control system of a brake system of a vehicle in a $\mu$-split situation, in which wheel-specific brake pressures ($P_{req,wdc,i+1,0}$, $P_{req,wdc,i+1,1}$) that are defined differently from the control strategy of the slip control system are set at opposite vehicle wheels (LM-wheel 0, HM-wheel 1) of a vehicle axle, and in doing so the resulting brake pressure difference ($p_{diff}$) is limited,
**characterized in that**

- for producing a brake pressure demand ($P_{req,i+1,0}$, $P_{req,i+1,1}$) for the opposite vehicle wheels (LM-wheel 0, HM-wheel 1) wheel-specifically, a maximum pressure difference value ($p_{diff,i+1,0}$, $p_{diff,i+1,1}$) is determined, which deviates with a predetermined tolerance value ($p_{tol}$) from a reference pressure difference ($p_{oi}$), wherein the reference pressure difference ($p_{oi}$) corresponds to the value of the current low-pass filtered brake pressure difference ($p_{filt,diff,i}$) , and
- the brake pressure demand ($P_{req,i+1,0}$, $P_{req,i+1,1}$) for each vehicle wheel (LM-wheel 0, HM-wheel 1) is determined as the minimum of the wheel-specific brake pressure ($P_{req,wdc,i+1,0}$, $P_{req,wdc,i+1,1}$) that is determined from the control strategy of the slip control system as well as the sum of the wheel-specific brake pressure ($P_{req,wdc,i+1,1}$, $P_{req,wdc,i+1,0}$) for the opposite vehicle wheel that is determined from the control strategy of the slip control system and the wheel-specific maximum pressure difference value ($p_{diff,i+1,0}$, $p_{diff,i+1,1}$) .

**2.** Method for adapting the control strategy of a slip control system of a brake system of a vehicle in a $\mu$-split situation, in which wheel-specific brake pressures ($P_{req,wdc,i+1,0}$, $P_{req,wdc,i+1,1}$) that are defined differently from the control strategy of the slip control system are set at opposite vehicle wheels (LM-wheel 0, HM-wheel 1) of a vehicle axle, and in doing so the resulting brake pressure difference ($p_{diff}$) is limited,
**characterized in that**

- for producing a brake pressure demand ($P_{req,i+1,0}$, $P_{req,i+1,1}$) for the opposite vehicle wheels (LM-wheel 0, HM-wheel 1) wheel-specifically, a maximum pressure difference value ($p_{diff,i+1,0}$, $p_{diff,i+1,1}$ is determined, which deviates with a predetermined tolerance value ($p_{tol}$) from a reference pressure difference ($p_{oi}$), wherein the reference pressure difference ($p_{oi}$) corresponds to the value of the current low-pass filtered brake pressure difference ($p_{filt,diff,i}$) and
- the brake pressure demand ($P_{req,i+1,0}$, $P_{req,i+1,1}$) for each vehicle wheel (LM-wheel 0, HM-wheel 1) is determined as the minimum of the wheel-specific brake pressure ($P_{req,wdc,i+1,0}$, $P_{req,wdc,i+1,1}$) that is determined from the control strategy of the slip control system as well as the sum of the average brake pressure ($p_{LM}$, $p_{HM}$) of the opposite vehicle wheel (LM-wheel 1, HM-wheel 0) and the wheel-specific maximum pressure difference value ($p_{diff,i+1,0}$, $p_{diff,i+1,1}$) .

**3.** Method according to Claim 2, **characterized in that,** for the determination of the brake pressure demand ($P_{req,wdc,i+1,0}$, $P_{req,wdc,i+1,1}$) , the average brake pressure of the opposite vehicle wheel (LM-wheel 0, HM-wheel 1) is modified depending on the average acceleration thereof.

4. Method according to any one of the preceding claims, **characterized in that** identical tolerance values ($p_{tol}$) are used for the determination of the maximum pressure difference value ($p_{diff,i+1,0}$, $p_{diff,i+1,1}$) for the opposite vehicle wheels (LM-wheel 0, HM-wheel 1).

5. Method according to any one of Claims 1 to 3, **characterized in that** different tolerance values ($p_{tol}$) are used for the determination of the maximum pressure difference value ($p_{diff,i+1,0}$, $p_{diff,i+1,1}$) for the opposite vehicle wheels (LM-wheel 0, HM-wheel 1).

6. Method according to any one of the preceding claims, **characterized in that** the brake pressure difference ($p_{diff}$) is modified depending on the difference of the accelerations of the two mutually opposite vehicle wheels (LM-wheel 0, HM-wheel 1) and is then low-pass filtered.

## Revendications

1. Procédé d'adaptation de la stratégie de régulation d'un système de régulation du glissement d'un système de freinage d'un véhicule dans une situation de conditions d'adhérence bilatérales différentes, dans laquelle des pressions de freinage ($P_{req,wdc,i+1,0}$, $P_{req,wdc,i+1,1}$) individuelles de roue différentes, déterminées à partir de la stratégie de régulation du système de régulation du glissement, sont réglées au niveau de roues de véhicule opposées (LM-Rad 0, HM-Rad 1) d'un essieu de véhicule et la différence de pression de freinage ($p_{diff}$) qui en résulte est ainsi limitée, **caractérisé en ce que**

   - en vue de générer une demande de pression de freinage ($P_{req,i+1,0}$, $P_{req,i+1,1}$) pour les roues de véhicule opposées (LM-Rad 0, HM-Rad 1), une valeur de différence de pression maximale ($p_{diff,i+1,0}$, $p_{diff,i+1,1}$) individuelle de roue est déterminée, laquelle diffère d'une valeur de tolérance ($p_{tol}$) prédéfinie d'une différence de pression de référence ($p_{oi}$), la différence de pression de référence ($p_{oi}$) correspondant à la valeur actuelle après filtrage passe-bas de la différence de pression de freinage ($p_{filt,diff,i}$), et
   - la demande de pression de freinage ($P_{req,1+1,0}$, $P_{req,i+1,1}$) pour chaque roue de véhicule (LM-Rad 0, HM-Rad 1) est déterminée en tant que minimum de la pression de freinage ($P_{req,wdc,i+1,0}$, $P_{req,wdc,i+1,1}$) individuelle de roue déterminée à partir de la stratégie de régulation du système de régulation du glissement ainsi que la somme de la pression de freinage ($P_{req,wdc,i+1,1}$, $P_{req,wdc,i+1,0}$) individuelle de roue déterminée à partir de la stratégie de régulation du système de régulation du glissement pour la roue de véhicule opposée et de la valeur de différence de pression maximale ($p_{diff,i+1,0}$, $p_{diff,i+1,1}$) individuelle de roue.

2. Procédé d'adaptation de la stratégie de régulation d'un système de régulation du glissement d'un système de freinage d'un véhicule dans une situation de conditions d'adhérence bilatérales différentes, dans laquelle des pressions de freinage ($P_{req,wdc,i+1,0}$, $P_{req,wdc,i+1,1}$) individuelles de roue différentes, déterminées à partir de la stratégie de régulation du système de régulation du glissement, sont réglées au niveau de roues de véhicule opposées (LM-Rad 0, HM-Rad 1) d'un essieu de véhicule et la différence de pression de freinage ($p_{diff}$) qui en résulte est ainsi limitée, **caractérisé en ce que**

   - en vue de générer une demande de pression de freinage ($P_{req,i+1,0}$, $P_{req,i+1,1}$) pour les roues de véhicule opposées (LM-Rad 0, HM-Rad 1), une valeur de différence de pression maximale ($p_{diff,i+1,0}$, $p_{diff,i+1,1}$) individuelle de roue est déterminée, laquelle diffère d'une valeur de tolérance ($p_{tol}$) prédéfinie d'une différence de pression de référence ($p_{oi}$), la différence de pression de référence ($p_{oi}$) correspondant à la valeur actuelle après filtrage passe-bas de la différence de pression de freinage ($p_{filt,diff,i}$), et
   - la demande de pression de freinage ($P_{req,i+1,0}$, $P_{req,i+1,1}$) pour chaque roue de véhicule (LM-Rad 0, HM-Rad 1) est déterminée en tant que minimum de la pression de freinage ($P_{req,wdc,i+1,0}$, $P_{req,wdc,i+1,1}$) individuelle de roue déterminée à partir de la stratégie de régulation du système de régulation du glissement ainsi que la somme de la pression de freinage moyenne ($p_{LM}$, $p_{HM}$) de la roue de véhicule opposée (LM-Rad 1, HM-Rad 0) et de la valeur de différence de pression maximale ($p_{diff,i+1,0}$, $p_{diff,i+1,1}$) individuelle de roue.

3. Procédé selon la revendication 2, **caractérisé en ce qu'**en vue de déterminer la demande de pression de freinage ($P_{req,wdc,i+1,1}$, $P_{req,wdc,i+1,0}$), la pression de freinage moyenne de la roue de véhicule opposée (LM-Rad 0, HM-Rad 1) est modifiée en fonction de son accélération moyenne.

**4.** Procédé selon l'une des revendications précédentes, **caractérisé en ce qu'**en vue de déterminer la valeur de différence de pression maximale ($p_{diff,i+1,0}$, $p_{diff,i+1,1}$) pour les roues de véhicule opposées (LM-Rad 0, HM-Rad 1), des valeurs de tolérance ($p_{tol}$) identiques sont utilisées.

**5.** Procédé selon l'une des revendications 1 à 3, **caractérisé en ce qu'**en vue de déterminer la valeur de différence de pression maximale ($p_{diff,i+1,0}$, $p_{diff,i+1,1}$) pour les roues de véhicule opposées (LM-Rad 0, HM-Rad 1), des valeurs de tolérance ($p_{tol}$) différentes sont utilisées.

**6.** Procédé selon l'une des revendications précédentes, **caractérisé en ce que** la différence de pression de freinage ($p_{diff}$) est modifiée en fonction de la différence des accélérations des deux roues de véhicule mutuellement opposées (LM-Rad 0, HM-Rad 1) et ensuite soumise à un filtrage passe-bas.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4225983 A1
- DE 3925828 A1
- DE 4114734 A1
- US 5944394 A